# EUROPÄISCHE PATENTSCHRIFT

(11) **EP 0 755 045 B1**
(45) Veröffentlichungstag und Bekanntmachung des Hinweises auf die Patenterteilung: **02.10.2002**
(21) Anmeldenummer: 96110883.4
(22) Anmeldetag: 05.07.1996
(51) Int. Cl.: G10K 11/178, F01N 1/06, F16L 55/033

(54) **Anordnung zur Auslöschung von Schallwellen**
Sound wave cancellation arrangement
Dispositif de suppression d'ondes sonores

(30) Priorität: 05.08.1995 DE 19528888; 20.07.1995 DE 19526456
(43) Veröffentlichungstag der Anmeldung: 22.01.1997
(73) Patentinhaber: Harman Audio Electronic Systems GmbH, 94315 Straubing (DE)
(72) Erfinder: Geisenberger, Stefan, 94315 Straubing (DE)
(74) Vertreter: Patentanwälte Westphal, Mussgnug & Partner

(56) Entgegenhaltungen:
- WO-A-95/02238

## Beschreibung

### Technisches Gebiet

Die Erfindung befaßt sich mit der Ausbildung von Anordnungen zur Auslöschung von Schallwellen, insbesondere mit solchen Anordnungen, die in Abgasanlagen von Verbrennungsmotoren zur Schallauslöschung eingesetzt werden.

### Stand der Technik

Gemäß dem Stand der Technik ist es bekannt, Schallemissionen dadurch zu beseitigen, daß die Schallwellen einer Schallemissionsquelle mit Schallwellen beaufschlagt werden, die bezogen auf die Schallwellen der Schallemissionsquelle um 180° phasenverschoben sind. Diese - die Schallwellen der Schallemission auslöschenden - Schallwellen werden allgemein von elektroakustischen Wandlern erzeugt, denen ein im Emissionsstrom ermitteltes und aufbereitetes Signal zugeführt wird.

Anordnungen, welche auf dem Prinzip des Antischalls basieren und im Zusammenhang mit Abgasanlagen von Verbrennungsmotoren betrieben werden, werfen eine Reihe von Problemen auf. Zum einen muß der Wandler, damit eine ausreichend gute Schallauslöschung stattfinden kann, entweder eine hohe Leistung haben oder aber in enger räumlicher Beziehung zu dem Bereich stehen, in welchem die Schallwellen der Schallemissionsquelle auf die vom Wandler erzeugten Schallwellen treffen. Da die Schallwellen in Abgasströmen von beispielsweise Verbrennungsmotoren temperatur- und schadstoffbelastet sind, führt eine enge räumliche Beziehung von Abgas und Wandler zu Haltbarkeitsproblemen, weil die Wandler/Lautsprecher nur über kurze Zeit den gegebenen Bedingungen Stand halten. Diese Probleme sind durch den Einsatz von verbesserten Materialien und Herstellungsverfahren nur bedingt lösbar. Ähnliche Probleme treten auf, wenn die Lautsprecher nicht wie etwa in DE 43 42 133.4 (Figur 2) direkt auf den Abgasstrom wirken, sondern - wie etwa in DE 43 17 403.5 (Figur 1) gezeigt - die Lautsprecher in einem separaten Boxengehäuse angeordnet sind und das Baßreflexrohr der Box mit dem Abgasrohr zusammengeführt ist. Durch die räumliche Trennung der Lautsprecher vom Abgasstrom wird zwar der Einfluß der Abgase auf die Lautsprecher gemindert, jedoch erfordert der Schallwegkanal zwischen dem Lautsprecher bzw. der Lautsprechermembran und der Verbindungsstelle vom Baßreflexrohr und Abgasrohr hohe Dauerleistungen des Lautsprechers, welche wiederum den Lautsprecher ähnlich wie die heißen Abgase erwärmen. Eine Kompromißanordnung ist in DE 43 42 133.4 (Figur 1) gezeigt, bei welcher das Abgasrohr in der Box mündet und die Lautsprecherachse einen vorbestimmten Winkel zum Übergangsbereich von Abgasrohr und Baßreflexrohr/Auspuffendstück hat.

Neben diesen - im Zusammenhang mit dieser Anmeldung als geschlossene Anordnungen bezeichneten - Ausbildungen sind auch offene Ausbildungen bekannt. Diese offenen Ausbildungen zeichnen sich dadurch aus, daß die Schallauslöschung außerhalb der Abgasanlage, d.h. in der Umwelt stattfindet. Dazu sind am Ende des Abgasrohres, also an der Stelle, an welcher die Abgase normalerweise an die Umwelt abgegeben werden, Lautsprecher oder mit Lautsprechern verbundene Schallwegleitungen vorgesehen, welche dem Ende des Abgasrohres beispielsweise nebengeordnet sind und dort auf die ausströmende Abgassäule einwirken. Eine offene Anordnung, welcher der Oberbegriff der Anmeldung entnommen ist, ist in DE 43 22 627 beschrieben. Gemäß dieser bekannten Anordnung ist das Magnetsystem, des ansonsten konventionell ausgebildeten Lautsprechers mit einem Kanal versehen, durch welchen das Ende des Abgasrohres, an welchem die schallbelasteten Abgase das Abgasrohr verlassen, geführt ist. Diese Anordnung vermeidet zwar die in der Schrift Automobiltechnische Zeitschrift, 1992, Seite 93 beschriebene Dipolwirkung von offenen Systemen, jedoch haben Versuche der Anmelderin gezeigt, daß eine solche Anordnung zum einen immer noch hohe Lautsprecherleistungen erfordert und zum weiteren in bezug auf das Auslöschverhalten noch nicht als optimal angesehen werden kann.

Daher liegt der Erfindung die Aufgabe zugrunde, eine offene Anordnung zur Schallauslöschung anzugeben, welche die Nachteile gemäß dem Stand der Technik vermeidet.

### Darstellung der Erfindung

Diese Aufgabe wird dadurch gelöst, daß eine Abdeckung vorhanden ist, welche gasdicht ausgebildet und mit der Membran und dem Abgasrohr verbunden ist und dabei den zwischen der Membran und dem durch den Kanal geführten Ende des Abgasrohres bestehenden Radialabstand nahe dem Magnetsystem überspannt.

Durch diese Maßnahme wird sichergestellt, daß zum einen die im Abgas befindlichen Partikel nicht in den Luftspalt des Magnetsystems eindringen können und zum weiteren akustische Kurzschlüsse zwischen den von der Membranvorder- bzw. Membranrückseite abgestrahlten Schallwellen ausgeschlossen werden.

Vorteilhafte Aus- und Weiterbildungen der Erfindung sind den Ansprüchen 2 - 7 entnehmbar.

Durch die wellenförmige Kontur der Abdeckung wird sichergestellt, daß der Hub des Schwingsystems nicht behindert wird. Außerdem macht diese Formung der Abdeckung auch die Verwendung von Zentriermembranen überflüssig, welche sonst gemäß dem Stand der Technik und somit auch von DE 43 22 627 zur Zentrierung des Systems eingesetzt werden.

Eine besonders einfache Art der Herstellung der Verbindung von Abdeckung und Membran ist dann gegeben, wenn die Abdeckung aus einem spritzfähigen Elastomer gebildet wird und mit der Membran durch Anspritzen verbunden ist. In diesem Fall kann das schon für die Membran-/Sickenkombination aus DE 43 43 334 bekannte Herstell- und Verbindungsverfahren zur zeitgleichen Herstellung einer Membran-/Abdeckungskombination genutzt werden.

Durch einen mehrlagigen Aufbau der Abdeckung, insbesondere durch die Verwendung einer Verstärkungseinlage wird eine verbesserte Zentrierwirkung quer zur Hubbewegung des Magnetsystems erzielt.

Ist zumindest eine Öffnung vorhanden, welche den von der Abdeckung, dem Ende des Abgasrohres und dem Magnetsystem gebildeten Raum R1 mit dem Raum R2 verbindet, welcher mit der Oberfläche der Membran in Verbindung steht, die dem Abgasrohr abgewandt ist, werden Dämpfungseinflüsse durch das im Raum R1 eingeschlossene Luftvolumen weitgehend vermieden.

Die Einhaltung der letztgenannten Verhältnisse ist auch vorteilhaft, wenn das Abgasrohr einen radialen Abstand A zur Wandung des Kanals aufweist. Hierdurch wird sichergestellt, daß durch den Hub der Membran zusätzlich auch die im Abstand A stehende Luft zu Kühlungszwecken bewegt wird, ohne daß der Luftaustausch über den Luftspalt erfolgt.

Hat die Stirnfläche des Abgasrohres einen axialen Abstand B zu der vom großen Durchmesser der kegelförmigen Membran gebildeten Ebene, kann die Leistung des Lautsprechers weiter reduziert werden. Dies ist darauf zurückzuführen, daß durch die enge räumliche Beabstandung von Membranoberfläche und Stirnfläche des Abgasrohres die Schallauslöschung weitgehend im Membrankegel stattfindet und somit der von der Membran abgegebenen Schalldruck keine Reduzierung über den Laufweg erfährt.

### Darstellung der Figuren

Es zeigen:
- Figur 1:: einen Schnitt durch einen Lautsprecher im Bereich des Magnetsystems;
- Figur 2:: einen weiteren Schnitt durch einen Lautsprecher;
- Figur 3:: einen Schnitt durch den Befestigungsbereich zwischen Abdeckung und Membran; und
- Figur 4:: eine weitere Darstellung gemäß Figur 1.

### Wege zum Ausführen der Erfindung

Die Erfindung soll nun anhand der Figuren näher erläutert werden.

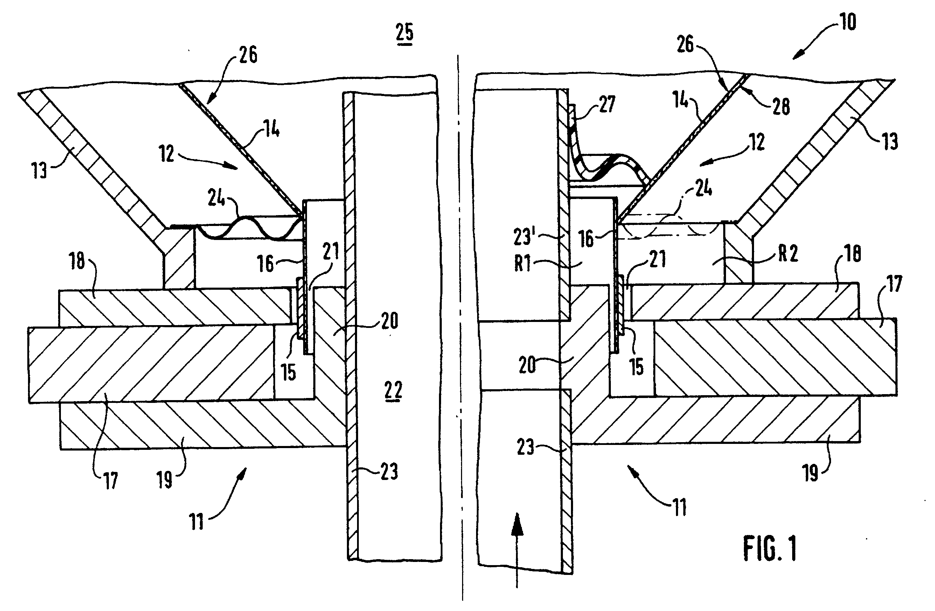

Figur 1 zeigt einen Schnitt durch einen Lautsprecher, wobei die links der Mittellinie gezeigte Darstellung eine Anordnung gemäß dem Stand der Technik und die rechts der Mittellinie gezeigte Darstellung eine Anordnung gemäß der Erfindung zeigt.

Der in Figur 1 gezeigte Lautsprecher 10 wird im wesentlichen von einem Magnetsystem 11, einem Schwingsystem 12 und einem Lautsprecherkorb 13 gebildet. Das Schwingsystem 12 besteht aus einer Membran 14 und einer Schwingspule 15, welche mittels eines Schwingspulenträgers 16 mit der Membran 14 verbunden ist. Das Magnetsystem 11 ist von einem Dauermagnetring 17, einer oberen Polplatte 18 und einem mit der unteren Polplatte 19 verbundenen Polkern 20 gebildet, wobei zwischen dem Polkern 20 und der oberen Polplatte 18 der Luftspalt 21 des Magnetsystems 11 steht. Die Membran 14 ist in den Lautsprecherkorb 13 eingesetzt, wobei das obere Ende der Membran 14 mit dem oberen Rand des Lautsprecherkorbes 13 verbunden ist (in Figur 1 nicht dargestellt). In diesem verbundenen Zustand von Membran 14 und Lautsprecherkorb 13 taucht der Schwingspulenträger 16 mitsamt der Schwingspule 15 in den Luftspalt 21 des Magnetsystems 11 ein. Der Polkern 20 des Magnetsystems 11 ist nicht massiv ausgebildet, sondern wird von einem Kanal 22 in axialer Richtung des Lautsprechers 10 vollständig durchzogen. Durch diesen Kanal 22 ist das Abgasrohr 23 geführt und endet dort mit axialem Abstand zur Membran 14 zugewandten Seite des Polkerns 20.

Gemäß der linken Darstellung von Figur 1 ist der Schwingspulenträger 16 mittels einer Zentriermembran 24 mit dem Korb 13 verbunden. Mittels dieser Zentriermembran 24 wird der Schwingspulenträger 16 und somit auch die Schwingspule 15 in jedem Betriebszustand des Lautsprechers 10 zentrisch im Luftspalt 21 gehalten. Durchströmen Abgase das Abgasrohr 23 in Pfeilrichtung, so findet im Raum 25 die Schallauslöschung statt, indem die von der Vorderseite 26 der Membran 14 abgestrahlten Schallwellen auf die Schallwellen treffen, die aus dem durch den Kanal 22 geführten Ende (in der linken Darstellung von Figur 1 nicht gezeigt) des Abgasrohres 23 austreten.

Die rechte Darstellung der Figur 1 unterscheidet sich von der linken Darstellung dadurch, daß die Vorderseite 26 der Membran 14 mit einer Abdeckung 27 verbunden ist. Diese Abdeckung 27, welche gasdicht ausgebildet ist und eine gewellte Kontur besitzt, ist zum Abgasrohr 23' geführt und mit diesem verbunden. Durch diese Abdeckung 27 wird sichergestellt, daß die von der Rückseite 28 der Membran 14 abgestrahlten Schallwellen nicht zur Vorderseite 26 der Membran 14 gelangen können. Die hierdurch bewirkte Behinderung von akustischen Kurzschlüssen kann durch eine in der linken Darstellung von Figur 1 gezeigten Zentriermembran 24 selbst dann nicht realisiert werden, selbst wenn diese Zentriermembran gasdicht ausgebildet wäre, denn das unter der Zentriermembran 24 (linke Darstellung von Figur 1) befindliche Luftvolumen würde in jedem Fall über den Luftspalt 21 mit der Vorderseite 26 der Membran 14 in Austausch stehen. Mit anderen Worten, wäre die Zentriermembran 24 gemäß dem Stand der Technik gasdicht ausgebildet, würde die untere Seite der Zentriermembran 24 unter Schwingungsbedingungen der Schwingspule 15 Schallwellen abstrahlen. In diesem Fall wäre eine gasdichte Zentriermembran 24 in ihrer Wirkung mit der Rückseite der Membran 14 vergleichbar, so daß - wenn keine Abdeckung 27 vorhanden ist - die von einer gasdichten Zentriermembran 24 abgestrahlten Schallwellen die Vorderseite 26 der Membran 14 durch den Luftspalt 21 erreichen können. Weiterhin sei darauf hingewiesen, daß durch den Luftstrom im Luftspalt 21, welcher durch eine gasdichte Membran 14 oder 24 erzeugt wird, unerwünschte Strömungsgeräusche entstehen, wenn keine Abdeckung 27 vorhanden ist.

Ferner ist in der rechten Darstellung gemäß Figur 1 die Zentriermembran 24 nur gestrichelt dargestellt. Dies bedeutet, daß eine solche Zentriermembran 24 bei Vorhandensein einer Abdeckung 27 nicht zwingend notwendig ist. Schon allein die gewellte Kontur der Abdeckung 27 stellt sicher, daß die Schwingspule 15 in jedem Betriebszustand des Lautsprechers 10 zentrisch zum Polkern 20 gehalten wird.

Außerdem durchdringt in der rechten Darstellung gemäß Figur 1 das Abgasrohr 23 den Kanal 22 nicht vollständig. Wie der rechten Darstellung von Figur 1 entnehmbar ist, ist das der Schallquelle (nicht dargestellte) abgewandte Ende des Abgasrohres 23 nicht vollständig durch den Kanal 22 geführt, sondern nur einige Zentimeter in den Kanal 22 eingeschoben. Die Abgase verlassen den Kanal 22 durch ein weiteres Abgasrohr 23', welches mit dem membranseitigen Ende des Kanals 22 verbunden ist. Ein solcher Aufbau des Lautsprechers 10 hat den Vorteil, daß ein nur mit dem Abgasrohr 23' versehener Lautsprecher 10 ohne große Änderungen auf Produktionslinien gefertigt werden kann, die auch für Lautsprecher verwendet werden, welche mit einem massiven Polkern 20 ausgestattet sind.

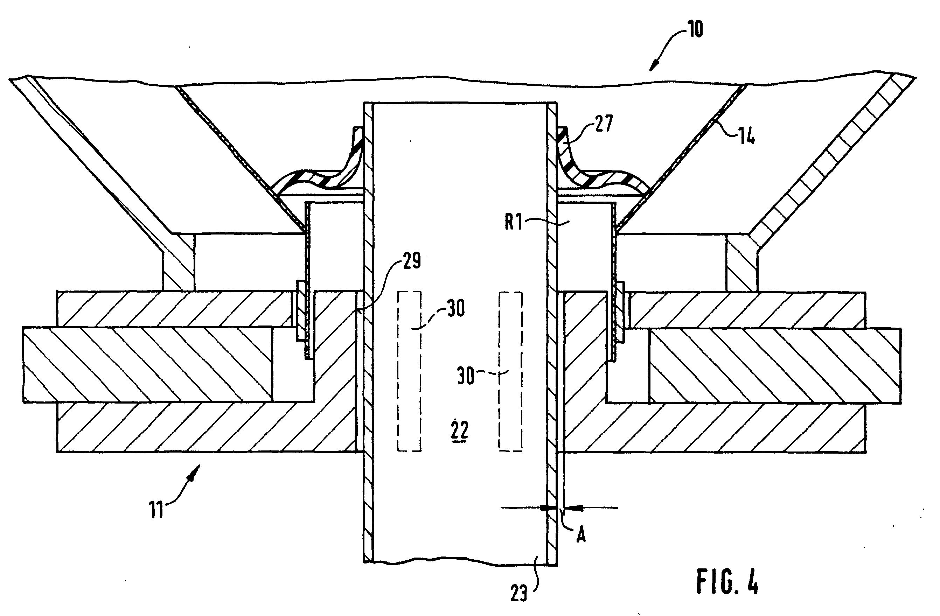

Mit Figur 4 ist ein Lautsprecher 10 gemäß der rechten Darstellung von Figur 1 gezeigt. Abweichend von der Darstellung gemäß Figur 1 ist das Abgasrohr 23 mit radialem Abstand A zur Wandung 29 des Kanals 22 in diesem angeordnet. Dieser Abstand A gewährleistet, daß durch die Hubbewegung der Membran 14 die im Raum R1 befindliche Luft durch den Abstand A gepumpt wird, wodurch eine Kühlung des Magnetsystems 11 bewirkt wird. Um das Abgasrohr 23 im Kanal 22 mit Abstand A anzuordnen, sind an der Wandung 29 des Kanals 22 entsprechende und den Abstand A ausfüllende Vorsprünge 30 vorgesehen.

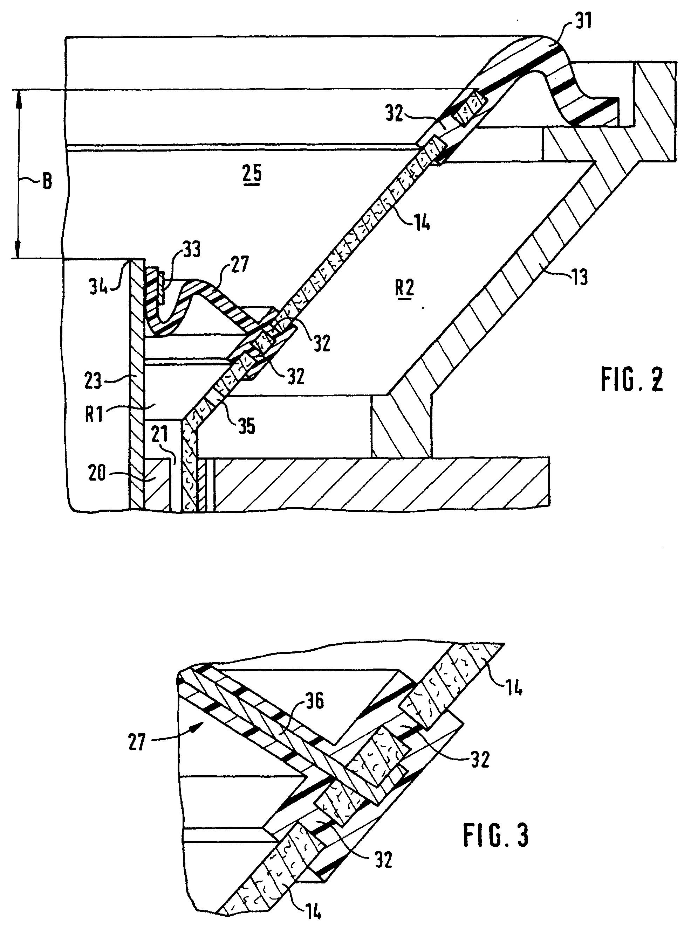

Weitere Einzelheiten zur Abdeckung 27 sind der Figur 2 entnehmbar. Die dort gezeigte Ausbildung zeigt eine Abdeckung 27, welche ebenso wie die Sicke 31, mit welcher die Membran 14 mit dem oberen Rand mit dem Lautsprecherkorbes 13 verbunden ist, aus einem spritzfähigen Elastomer gebildet. Ein Material, welches zu diesem Zweck geeignet ist, ist etwa Silopren HV 2 von BASF. Um eine feste Verbindung der Membran 14 zur Aufhängung 27 bzw. zur Sicke 31 herzustellen, sind die Bereiche, in welchen die Teile 27, 31 mit der Membran 14 verbunden sind, mit Durchbrüchen 32 versehen. Wird eine solche Membran 14 in ein Spritzgießwerkzeug (nicht dargestellt) eingelegt, lassen sich die Sicke 31 und die Abdeckung 27 sehr leicht an die Membran 14 anvulkanisieren. Die Verbindungsfestigkeit der anvulkanisierten Teile 27, 31 wird dadurch sichergestellt, daß die Materialien, aus welchen die Teile 27, 31 gebildet sind, die Durchbrüche 32 in der Membran 14 durchdringen. Die Verbindung zwischen der Abdeckung 27 und dem Abgasrohr 23, (23') ist mittels eines Spannbandes 33, welches die Aufhängung 27 gegen das Auspuffrohr 23, (23') preßt, realisiert. Die Verbindung zwischen Aufhängung 27 und Membran 14 bzw. dem Abgasrohr 23, (23') ist nicht auf die erwähnten Verbindungsverfahren beschränkt. Vielmehr kann einem anderen - nicht dargestellten Ausführungsbeispiel - die Aufhängung 27 mit der Membran 14 und/oder mit dem Auspuffrohr 23, (23') als Ultraschallschweißverbindung ausgeführt sein, denn durch die in Figur 2 gezeigten räumlichen Gegebenheiten sind die Befestigungspunkte zwischen der Aufhängung 27 und den mit ihr verbundenen Teilen 14, 23, (23') für Ultraschallschweißwerkzeuge frei zugänglich.

Auch ist der Darstellung gemäß Figur 2 entnehmbar, daß das obere Ende 34 des Abgasrohres 23 einen axialen Abstand B zum oberen Ende der Membran 14 einnimmt. Dieser axiale Abstand B, welcher nicht maßstäblich wiedergegeben ist, gewährleistet, daß das in den Raum 25 ragende Ende 34 des Abgasrohres 23 nicht als sogenannter Phasenkegel wirkt.

Der Abstand B ist im wesentlichen von der Strömungsgeschwindigkeit der Abgase im Abgasrohr 23 abhängig. Dies bedeutet, daß zur Erhöhung der von der Membran 14 bereitgestellten Auslöschungsleistung der Abstand B zwischen der aus dem Ende 34 austretenden Abgassäule und der Membran 14 möglichst gering sein sollte. Mit anderen Worten, die Schallauslöschung sollte durch Anpassung der baulichen Gegebenheiten möglichst innerhalb des von der konischen Membran 14 ummantelten Raumes erfolgen. Ist aber die Strömungsgeschwindigkeit der Abgase im Abgasrohr 23 gering, ist die Einhaltung der eben erläuterten Bedingungen nicht so kritisch wie in Fällen höherer Strömungsgeschwindigkeiten. Dies bedeutet, daß in Fällen niedriger Strömungsgeschwindigkeit der Abgase der gezeigte Abstand B auch verkleinert werden kann. Eine Ausbildung im letztbenannten Sinne hat den weiteren Vorteil, daß durch das dann längere Rohrende im Konus der Membran 14 die temperaturempfindlichen Komponenten des Lautsprechers 10 weiter vom heißen Abgasstrom entfernt sind.

Ist aber das freie Ende 34 des Abgasrohres 23 zu lang ausgebildet, wird die Schallauslöschung zusätzlich negativ beeinflußt, selbst wenn der Abstand B bezogen auf die Strömungsgeschwindigkeit der Abgase optimiert wurde. Diese weitere Beeinträchtigung kann daher rühren, daß das freie Ende 34 des Abgasrohres 23 im Konus wie ein Phasenkegel wirkt. Unter Berücksichtigung dieser Angaben kann gesagt werden, daß der Abstand B möglichst groß gewählt werden sollte.

Um die Dämpfung der Hubbewegung des Schwingsystems 12 durch die luftdichte Abdeckung 27 nicht zu behindern, ist in Figur 2 eine Öffnung 35 gezeigt, welche einen nicht über den Luftspalt 21 vollzogenen Luftaustausch zwischen dem eingeschlossenen Raum R1 und dem Raum R2 erlaubt.

Auf eine Zentriermembran 24 kann - wie in Figur 1 (rechte Seite) durch die Strichelung angedeutet - bei Vorhandensein einer Abdeckung 27 dann verzichtet werden, wenn diese Abdeckung 27 beispielsweise mit einer Verstärkungseinlage 36 versehen ist. In Figur 3 ist die so realisiert, daß die Verstärkungseinlage 36 von dem benannten Elastomermaterial ummantelt ist, aus welchem die Abdeckung 27 gemäß der Darstellung nach Figur 2 gebildet ist.

## Patentansprüche

1. Anordnung zum Auslöschen von Schallwellen in Abgasströmen
- mit einem Lautsprecher (10), welcher im wesentlichen von einem Magnetsystem (11), einem aus einer Membran (14) und einer Schwingspule (15) gebildeten Schwingsystem (12) und einem Korb (13) gebildet ist, wobei das Magnetsystem (11) in Längsrichtung des Lautsprechers (10) mit einem Kanal (22) versehen ist, und
- mit einem Abgasrohr (23, 23'), dessen eines Ende, an welchem die schallbelasteten Abgase aus dem Abgasrohr (23, 23') austreten, so durch den Kanal (22) geführt ist, daß die Stirnseite dieses Endes einen axialen Abstand zum Magnetsystem (11) hat,
**dadurch gekennzeichnet, daß** eine Abdeckung (27) vorhanden ist, welche gasdicht ausgebildet ist und welche mit der Membran (14) und dem Abgasrohr (23, 23') verbunden ist und den zwischen der Membran (14) und dem durch den Kanal (22) geführten Ende des Abgasrohres (23, 23') bestehenden Radialabstand überspannt.

2. Anordnung nach Anspruch 1,
**dadurch gekennzeichnet, daß** die Abdeckung (27) wellenförmig ausgebildet ist.

3. Anordnung nach Anspruch 1 oder Anspruch 2,
**dadurch gekennzeichnet, daß** die Abdeckung (27) aus einem spritzfähigem Elastomer gebildet ist und daß die Abdeckung zumindest mit der Membran (14) durch Anspritzen verbunden ist.

4. Anordnung nach Anspruch 3,
**dadurch gekennzeichnet, daß** die Abdeckung (27) mehrlagig aufgebaut ist.

5. Anordnung nach jedem der Ansprüche 1 - 4,
**dadurch gekennzeichnet, daß** zumindest eine Öffnung (36) vorhanden ist, welche den von der Abdeckung (27), dem Ende des Abgasrohres (23, 23') und dem Magnetsystem (11) gebildeten Raum R1 mit dem Raum R2 verbindet, welcher mit der Oberfläche (28) der Membran (14) in Kontakt steht, die dem Ende des Abgasrohres (23, 23') abgewandt ist.

6. Anordnung nach jedem der Ansprüche 1 - 4,
**dadurch gekennzeichnet, daß** das Abgasrohr (27) mit radialem Abstand A zu den Wandungen (29) des Kanals (22) angeordnet ist.

7. Anordnung nach jedem der Ansprüche 1 - 6,
**dadurch gekennzeichnet, daß** die Membran (14) kegelförmig ausgebildet ist und daß ein axialer Abstand B zwischen der Stirnfläche des Endes des Abgasrohres (23, 23') und der durch den großen Durchmesser des Membrankegels gebildeten Ebene besteht.

## Claims

1. An arrangement for the suppression of sound waves in exhaust gas streams
- having a loudspeaker (10), which is formed essentially by a magnet system (11), a vibrating system (12) formed by a diaphragm (14) and a voice coil (15) and a frame (13), with the magnet system (11) being provided with a channel (22) in the longitudinal direction of the loudspeaker (10), and
- having an exhaust pipe (23, 23'), the one end of which, at which the sound-loaded exhaust gases emerge from the exhaust gas (23, 23'), is passed through the channel (22) so that the front side of this end has an axial spacing to the magnet system (11),
**characterised in that** a covering (27) is provided, which has a gas-tight construction and which is connected to the diaphragm (14) and the exhaust pipe (23, 23') and spans the radial distance existing between the diaphragm (14) and the end of the exhaust pipe (23, 23') passed through the channel (22).

2. An arrangement according to Claim 1,
**characterised in that** the covering (27) has a wavy construction.

3. An arrangement according to Claim 1 or Claim 2,
**characterised in that** the covering (27) is made from an injectable elastomer
**and in that** the covering is connected by gating at least to the diaphragm (14).

4. An arrangement according to Claim 3,
**characterised in that** the covering (27) has a multilayer construction.

5. An arrangement according to each of Claims 1 - 4,
**characterised in that** at least one aperture (36) is provided, which connects the chamber R1 formed by the covering (27), the end of the exhaust pipe (23, 23') and the magnet system (11) to the chamber R2, which is in contact with the surface (28) of the diaphragm (14) faced away from the end of the exhaust pipe (23, 23').

6. An arrangement according to each of Claims 1 - 4,
**characterised in that** the exhaust pipe (27) is disposed at a radial distance A from the walls (29) of the channel (22).

7. An arrangement according to each of Claims 1 - 6,
**characterised in that** the diaphragm (14) has a conical construction
**and in that** there is an axial spacing B between the front face of the end of the exhaust pipe (23, 23') and the plane formed by the large diameter of the diaphragm cone.

## Revendications

1. Dispositif de suppression d'ondes sonores dans des courants de gaz d'échappement, comprenant :
- un haut-parleur (10) constitué essentiellement d'un système magnétique (11), d'un système vibrant (12) formé d'une membrane (14) et d'une bobine mobile (15), et d'un saladier (13), ce système magnétique (11) présentant un canal (22) orienté selon la direction longitudinale du haut-parleur (10),
- un tube de gaz d'échappement (23, 23') dont l'extrémité par laquelle les gaz d'échappement porteurs de sons sortent du tube (23, 23') est montée dans le canal de manière que la face frontale de cette extrémité se trouve à une certaine distance axiale du système magnétique (11),
**caractérisé en ce qu'**
il existe un couvercle (27) étanche aux gaz, qui est relié à la membrane (14) et au tube d'échappement (23, 23') et qui recouvre près du système magnétique l'espace radial existant entre la membrane (14) et l'extrémité du tube de gaz d'échappement (23, 23') passant dans le canal (22).

2. Dispositif selon la revendication 1,
**caractérisé en ce que**
le couvercle (27) a une forme ondulée.

3. Dispositif selon l'une quelconque des revendications 1 ou 2,
**caractérisé en ce que**
le couvercle (27) est constitué par un élastomère injectable et il est relié à la membrane (14) par injection.

4. Dispositif selon la revendication 3,
**caractérisé en ce que**
le couvercle (27) est fait de plusieurs couches.

5. Dispositif selon l'une quelconque des revendications 1 à 4,
**caractérisé en ce qu'**
il existe au moins une ouverture (36) reliant l'espace R1 constitué par le couvercle (27), l'extrémité du tube de gaz d'échappement (23, 23') et le système magnétique (11), à l'espace R2 qui est en contact avec la face (28) de la membrane (14) qui tourne le dos à l'extrémité du tube (23, 23').

6. Dispositif selon l'une quelconque des revendications 1 à 4,
**caractérisé en ce que**
le tube de gaz d'échappement (27) est disposé à une distance radiale A des parois (29) du canal (22).

7. Dispositif selon l'une quelconque des revendications 1 à 6,
**caractérisé en ce que**
la membrane (14) a une forme conique et il existe une distance axiale B entre la face frontale de l'extrémité du tube de gaz d'échappement (23, 23') et le plan contenant le grand diamètre du cône de la membrane.
